# EUROPÄISCHE PATENTSCHRIFT

(11) **EP 2 517 825 B1**
(45) Veröffentlichungstag und Bekanntmachung des Hinweises auf die Patenterteilung: **23.03.2016**
(21) Anmeldenummer: 12164570.9
(22) Anmeldetag: 18.04.2012
(51) Int. Cl.: B23Q 11/00, B23Q 17/00

(54) **Werkzeugmaschine mit Steuereinheit**
Machine tool with control unit
Machine-outil avec unité de commande

(30) Priorität: 29.04.2011 DE 102011017808
(43) Veröffentlichungstag der Anmeldung: 31.10.2012
(73) Patentinhaber: Homag Holzbearbeitungssysteme GmbH, 72296 Schopfloch (DE)
(72) Erfinder: Dettling, Peter, 72160 Horb (DE)
(74) Vertreter: Hoffmann Eitle

(56) Entgegenhaltungen:
- EP-A1- 0 652 074
- EP-A1- 1 762 331
- WO-A1-2008/031406
- DE-A1- 10 007 126
- FR-A1- 2 147 763
- US-A1- 2009 319 232

## Beschreibung

### Gebiet der Erfindung

Die Erfindung betrifft eine Werkzeugmaschine mit Steuereinheit, die insbesondere für eine Notfallsteuerung geeignet ist.

### Stand der Technik

Derzeit werden Werkzeugmaschinen von einer Steuereinheit gesteuert, die sich außerhalb der Werkzeugmaschine befindet. Eine solche Ausführungsform ist in der DE 100 07 126 A1 offenbart. Die Werkzeugmaschine umfasst ein Gehäuse zur Aufnahme einer Spindel mit einer Werkzeugaufnahme für ein Werkzeug, das ein Werkstück bearbeiten soll, und eines Elektromotors, der die Spindel antreibt. An der Spindel sind Datenerfassungselemente zur Aufnahme von Betriebs- oder Zustandsdaten der Spindel vorgesehen und darüber hinaus ein in die Spindel integriertes Datenspeicherelement zur Abspeicherung der von den Datenerfassungselementen aufgenommenen Daten. Die gespeicherten Daten werden dann an eine externe EDV-Station übertragen, die die erfassten Daten verarbeitet. Die Daten können jedoch auch in einer in der Spindel vorgesehen Datenverarbeitungseinheit aufbereitet werden, so dass die gespeicherten Daten, die Rückschlüsse auf das Betriebsverhalten der Spindel ziehen lassen und dadurch die Ursachen für Funktionsstörungen ermittelt werden können, mit Messgrößen verschiedener Sensoren kombiniert und verarbeitet werden, so dass z.B. bei Verknüpfung von Temperaturdaten mit Drehzahldaten eine entsprechende axiale Verlagerung der Spindelwelle der Spindel als Mikrometerangabe ermittelt werden kann. Ferner können die Sensordaten zur Herstellung einer Datenbusstruktur aufbereitet werden. Die Elemente können mit der Maschinensteuerung der Werkzeugmaschine verbunden sein um einzelne oder eine bestimmte Anzahl gewünschter Sensordaten an die Maschinensteuerung weiterzuleiten.

Die DE 10 2008 029 672 offenbart eine Vorrichtung zur Zustandsüberwachung und Zustandsdiagnose einer Maschine mit einem Gehäuse. Die Vorrichtung umfasst eine Messwerterfassungseinheit, die Messwerte von Sensoren erfasst, und eine Kommunikationseinheit zum Einlesen von Prozess- und Betriebsdaten der Maschine. Eine Auswerteeinheit ermittelt unter Berücksichtung der von der Messwerterfassungseinheit und der Kommunikationseinheit erhaltenen Daten einen Zustand der Maschine charakterisierenden Wert, der dann von der Kommunikationseinheit an eine externe Steuerung ausgegeben werden kann.

Eine solche Weiterleitung der (verarbeiteten) Daten an die Maschinensteuerung (oder auch Hauptsteuerung) kann jedoch bei kritischen Zuständen der Spindel unter Umständen zu viel Zeit in Anspruch nehmen. Denn die Maschinensteuerung muss sehr viele Abläufe Kontrollieren und Steuern, so dass es eine die in der Spindel oder Maschine verarbeiteten Daten eventuell nicht sofort bearbeitet werden können, da die Maschinensteuerung noch anderweitig beschäftigt ist. So kann es eine gewisse Zeit dauern, bis die Daten in der Maschinensteuerung ausgewertet sind und darauf reagiert werden kann. In dieser Zeitdauer kann es jedoch vorkommen, dass bspw. auf kritische Zustände in der Spindeleinheit, bzw. an der Spindel nicht mehr angemessen von der Spindelsteuerung reagiert werden kann.

Als weiteres Dokument ist DE 100 07 126 A1 bekannt, die eine Spindel mit einem Datenspeicherelement betrifft. Dieses ist zur Abspeicherung der aufgenommenen Daten eines Erfassungselements vorgesehen, welches Erfassungselement Betriebs-/ und/oder Zustandsdaten der Spindel aufnimmt.

Die WO 2008/031406 A1 zeigt eine Arbeitsspindel sowie ein Verfahren zum Antreiben einer Arbeitsspindel. Ein Sensor ist zum Erfassen von Daten vorgesehen, insbesondere der Auslenkung der Antriebswelle von der Drehachse.

Ein weiteres Dokument ist die EP 1 762 331 A1, die eine Spindel mit einem per Funk auslesbaren Datenerfassungselement zeigt.

### Darstellung der Erfindung

Der Erfindung liegt die Aufgabe zugrunde, eine Werkzeugmaschine, insbesondere eine Bearbeitungsspindel, bereitzustellen, die eine schnellere und flexiblere Reaktion auf äußere Umstände ermöglicht.

Die Aufgabe der Erfindung wird durch eine Werkzeugmaschine nach Anspruch 1 und einem Steuerverfahren für eine Werkzeugmaschine nach Anspruch 8 gelöst. Weitere die Erfindung ausgestaltende Merkmale sind in den Unteransprüchen enthalten.

Eine erfindungsgemäße Werkzeugmaschine weist ein Werkzeug für die Bearbeitung von Werkstücken bevorzugt aus Holz, Holzwerkstoffen und/oder Kunststoffen, und ein Gehäuse auf. Ferner umfasst die Werkzeugmaschine eine Steuereinheit, mit einer Sensoreinrichtung, die zumindest einen Sensor zum Erfassen von zumindest einem Datensignal aufweist, und mit einer Datenverarbeitungseinrichtung, die dazu eingerichtet ist, die von den Sensoren erfassten Daten und/oder Daten aus einer externen Hauptsteuerung zu verarbeiten. Die Steuereinheit ist dazu eingerichtet, auf Grundlage der verarbeiteten Daten Steuerbefehle zu generieren und auszugeben, die direkt auf Prozessparameter Einfluss nehmen. Dadurch, dass die Steuereinheit selbst Steuerbefehle generieren und anderen Komponenten Anweisungen geben kann wird zum Einen die Reaktionszeit der Steuereinheit erheblich gesenkt und ein Ausfall oder eine Beschädigung der Spindeleinheit, bzw. der Spindel kann vermieden werden. Die Steuereinheit gestattet also durch die hohe Verarbeitungsgeschwindigkeit schnellere Reaktionen bei kritischen Zuständen (z.B. eine Unwucht durch falsch eingestellte oder defekte Werkzeuge). Zum Anderen wird die Werkzeugmaschine auch in der Kommunikation mit der Hauptsteuerung flexibler, bspw. wenn eine Umstellung auf einen anderen Maschinentyp notwendig ist. Die Steuereinheit ist eingerichtet, mittels eines Kompatibilitätsmodus Signale von verschiedenen Spindeltypen zu emulieren. Dadurch ist der Vorteil gegeben, dass es möglich ist, neue Spindeln gegen Spindeln älterer Arten auszutauschen, ohne dass Änderungen in der Maschinensteuerung notwendig sind. Allerdings muss die Steuereinheit in einer anderen Zielrichtung der Erfindung nicht dazu eingerichtet sein, mittels eines Kompatibilitätsmodus Signale von verschiedenen Spindeltypen zu emulieren.

"Emulieren" ist im Sinne dieser Anmeldung allerdings nicht nur im Hinblick darauf auszulegen, dass ein Austausch älterer Spindeln ermöglicht wird. Vielmehr betrifft dies generell die Unabhängigkeit von bestimmten Spindeltypen, so dass die vorliegende Erfindung die Variabilität der Werkzeugmaschine im Allgemeinen erhöht. Im Ergebnis wird durch die vorgesehene Emulation eine Funktion nachgebildet, und die Steuereinheit stellt eine geräteunabhängige Umgebung Bereit.

Die Steuereinheit der Werkzeugmaschine kann ferner eine Speichereinrichtung enthalten, die eingerichtet ist, die Datensignale des Maschinentyps, der Sensoreinrichtung, die von der Datenverarbeitungseinrichtung verarbeiteten Daten, die von der Hauptsteuerung an die Steuereinheit ausgegebenen Daten und/oder die von der Überwachungseinheit festgelegten Zustände zu speichern. Das kontinuierliche Erfassen der Verschleißparameter ermöglicht eine Vorhersage über die Restlebensdauer einer Bearbeitungsspindel. Darüber hinaus kann der Anwender zur nachträglichen Analyse die Betriebszustände im Kurz- und im Langzeitspeicherbereich direkt in der Maschinensteuerung abrufen.

Die Werkzeugmaschine weist vorzugsweise auch zumindest eine Aktoreinrichtung mit zumindest einem Aktor auf, der durch aus der Steuereinheit ausgegebene Signale betätigt wird. Dadurch, dass Aktoren innerhalb der Werkzeugmaschine vorgesehen sind, steigt die Reaktionsgeschwindigkeit weiter und die Notfallsicherheit in bestimmten Fällen wird verbessert.

Die Werkzeugmaschine wird ferner bevorzugt durch einen in der Werkzeugmaschine befindlichen Motor angetrieben oder enthält eine Antriebsschnittstelle zum Antreiben des Werkzeugs der Werkzeugmaschine. Dadurch kann durch eine entsprechende Steuerung der Kraftfluss, der das Werkzeug antreibt, sehr schnell innerhalb der Spindeleinheit unterbrochen werden.

Die Sensoren der Sensoreinrichtung sind Sensoren, die die Positionsdaten des Werkzeugspanners erfassen. Diese Signale sind die relevantesten für die Notfallsteuerung und die zuverlässigsten um Aussagen über die Lebensdauer der Spindel zu treffen.

Die Steuereinheit kann eine Kommunikationsschnittstelle umfassen und dazu eingerichtet sein, die verarbeiteten Prozessdaten an eine externe Maschinensteuerung auszugeben.

Bei der Werkzeugmaschine kann vorzugsweise die Steuereinheit auch eine Überwachungseinheit für zeitkritische Prozessparameter umfassen, die eingerichtet ist festzulegen, ob von der Sensoreinrichtung erfasste Daten und/oder von der Datenverarbeitungseinrichtung verarbeitete Daten einen kritischen Wert erreicht haben. Die Steuereinheit ist dann dazu eingerichtet, als Reaktion auf die Festlegung der Überwachungseinheit, dass ein kritischer Wert erreicht wurde, Steuersignale für eine Notfallsteuerung auszugeben. bei der Notfallsteuerung ist die Geschwindigkeit, mit der die Steuersignale ausgegeben und befolgt werden, essentiell. Daher zeigt sich der Vorteil der Erfindung hier ganz besonders.

### Kurze Beschreibung der Figuren der Erfindung

- Figur 1: zeigt ein Schaltbild einer bevorzugten Ausführungsform der Erfindung.
- Figur 2: zeigt eine herkömmliche Werkzeugmaschine, genauer gesagt eine Spindeleinheit, in der die vorliegende Erfindung verwendet werden kann;

### Beschreibung bevorzugter Ausführungsformen

Die vorliegende Erfindung betrifft die Steuerung einer Werkzeugmaschine, die zur Bearbeitung von Werkstücken, bevorzugt plattenförmigen Werkstücken aus Holz, Holzwerkstoffen, Kunststoffen oder ähnlichem hergestellt sind. Im Folgenden wird die Erfindung lediglich beispielhaft anhand einer Spindeleinheit als Werkzeugmaschine beschrieben. Die Erfindung lässt sich jedoch auch auf andere Werkzeugmaschinen zur Bearbeitung von Werkstücken anwenden. Solche Werkzeugmaschinen können stationäre Maschinen oder auch Durchlaufmaschinen sein, die Vorrichtungen jeder beliebigen Art sein können (Schleif-, Säge-, Fräsmaschinen, Kantenanleimaggregate usw.), insbesondere aber einwechselbare oder austauschbare Vorrichtungen, die mit der Zeit abgenutzt werden (einem Verschleiß unterliegen).

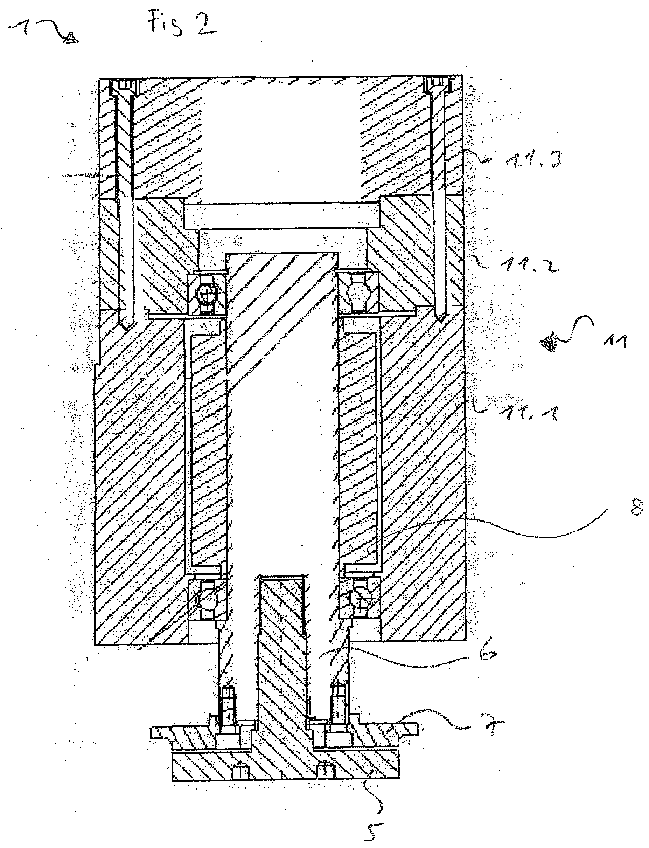

Figur 2 zeigt eine Spindeleinheit, die eine Werkzeugspindel 6 zur Aufnahme eines Werkzeugs 7 aufweist, und auf die die Erfindung bevorzugt angewendet werden kann. Ein solches Werkzeug kann beispielsweise ein Bohrer, eine Fräse, eine Säge oder jedes andere Werkzeug sein, das an einer Spindel 6 befestigt wird. Die Spindel 6 kann stattdessen aber auch eine Werkstückaufnahme (nicht gezeigt) aufweisen, wie es bspw. bei einer Drehmaschine der Fall ist. "Spindel" bedeutet in der vorliegenden Anmeldung eine sich drehende Welle oder auch Hohlwelle, die direkt oder indirekt angetrieben wird. Ferner umfasst die Spindeleinheit 1 ein Gehäuse 11, in dem die Spindel 6 und alle anderen Elemente der Spindeleinheit 1 aufgenommen sind oder an dem diese angebracht sind. Das Gehäuse 11 kann einstückig ausgeführt sein, vorliegend ist es jedoch aus Gehäuseteilen 11.1, 11.2 und 11.3 aufgebaut, von denen einer ein Deckel 11.3 ist. Die einzelnen Gehäuseteile 11.1, 11.2, 11.3 sind miteinander mittels einer oder mehrerer Schrauben aneinander befestigt. Vorliegend sind jeweils dieselben Schrauben für die Befestigung aller Gehäuseteile vorgesehen, es können jedoch auch separate Befestigungsschrauben für die Gehäuseteile 11.1 und 11.2, bzw. die Gehäuseteile 11.2 und 11.3 (Deckel) vorgesehen sein.

Der Motor ist vorzugsweise in der Spindeleinheit 1 so verbaut, dass Statorwicklungen (nicht dargestellt) im Gehäuse 11 vorgesehen sind, beispielsweise in das Gehäuse eingegossen oder eingesetzt, und ein entsprechender Rotor 8 an der Spindel 6 befestigt ist. Wenn die Statorspulen bestromt werden dreht sich der Rotor 8 und damit auch die Spindel 6. Selbstverständlich sind auch Ausführungen mit mehreren Spindeln möglich, die entweder jeweils eigens durch einen Motor angetrieben werden oder über Verbindungen (nicht gezeigt) zur angetriebenen Spindel 6 von dieser in Drehung versetzt werden. Es ist weiterhin möglich, dass die Spindel über einen externen Motor angetrieben wird, der die Rotation auf die Spindel über Zahnräder an einer Schnittstelle (nicht gezeigt) in die Spindeleinheit 1 einbringt. Die Schnittstelle zur Einleitung der Rotation auf die Spindel 6 ist dann bevorzugt ein Zahnrad, das mit einem von einem Motor angetriebenen Zahnrad eingreift. Es sind aber auch andere Schnittstellen möglich, die eine Rotation auf die Spindel übertragen können.

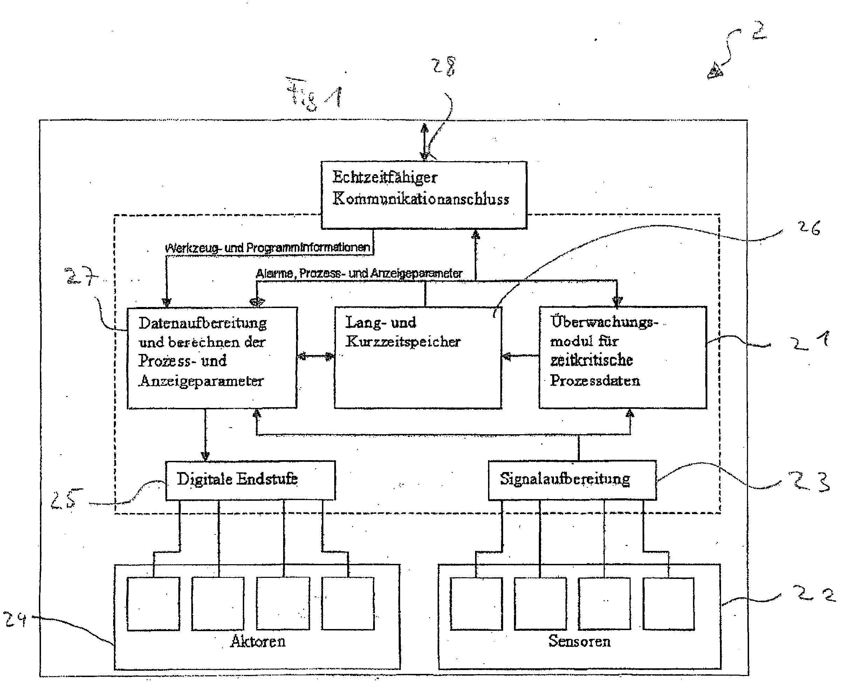

In Figur 1 ist eine erfindungsgemäße Steuereinheit 2 für eine Werkzeugmaschine schematisch dargestellt. Die Steuerung 2 kann eine Sensoreinrichtung 22, eine Aktoreinrichtung 24, eine Datenaufbereitungs- und/oder -verarbeitungseinheit 27, eine Speichereinrichtung 26, eine Überwachungseinheit 21 und eine Kommunikationsschnittstelle 28 enthalten.

Im Prinzip verarbeitet die Datenverarbeitungseinheit 27 Daten die sie aus der Sensoreinrichtung 22 und/oder über die Kommunikationsschnittstelle 28 von einer externen (Haupt)Steuerung (nicht dargestellt) erhält. Die Datenverarbeitungseinheit 27 erfasst somit alle für den Betrieb und den Verschleiß der Spindeleinheit 1 relevanten Prozessdaten/-parameter und verarbeitet diese, bspw. auch in Verbindung mit den durch die Hauptsteuerung zur Verfügung gestellten Werkzeug- und Bearbeitungskenngrößen. Auf Grundlage der aufbereiteten und verarbeiteten Daten gibt die Steuerung 2 Steuerbefehle an die Aktoreinrichtung 24 und/oder über die Kommunikationsschnittstelle 28 an externe Aktoren oder die Hauptsteuerung aus. Diese Steuerbefehle können aus einer Notfallsteuerung (später beschrieben) stammen, können aber auch nur einfache Befehle zur Veränderung der Vorlaufgeschwindigkeit einer Transportvorrichtung, der Stellung der Werkzeugmaschine, der Stellung des Werkzeugs und/oder die Anpassung oder Synchronisierung der Hauptsteuerung an eine bestimmte Werkzeugmaschine (bspw. Spindeleinheit 1) enthalten. Die Datenverarbeitungseinheit 27 generiert somit Steuersignale, durch die externe Vorgänge/Aktoren oder Vorgänge/Aktoren in der Spindeleinheit 1 gesteuert werden können.

In der Spindeleinheit 1, bzw. in deren Steuereinheit 2, können auch Daten und Parameter für Prozesse und Arbeitsabläufe der Spindeleinheit 1 abgelegt sein. Dadurch "weiß" die Spindeleinheit 1 selbst, welche Bearbeitungsparameter wie eingestellt werden müssen. Auf diese Weise können Bearbeitungsparameter wie Vorschub, Abstände, Bearbeitungsvorgänge und auch andere Umgebungsparameter situationsbedingt eingestellt werden. Wenn bspw. die Hauptsteuerung an die Steuerung 2 der Spindeleinheit 1 die Information ausgibt, dass nun neue zu bearbeitende Werkstücke auf der Transportvorrichtung liegen, kann die Spindeleinheit je nach Modell die Prozessparameter selbst an die Hauptsteuerung ausgeben, ohne dass diesbezüglich eine Bedienung durch einen Arbeiter notwendig wäre. Unter Umständen kann die Steuerung 2 auch veranlassen, dass überhaupt keine Bearbeitung erfolgt. Dies wäre bspw. der Fall, wenn die zu erfolgende Bearbeitung eines neuen Werkstücks nur eine bestimmte Bearbeitung wie das Anleimen von Kanten vorsieht, auf der Spindeleinheit aber eine Säge angebracht ist. Auch Unterschiede zwischen älteren und neueren Spindelmodellen lassen sich durch eine solche spindelinterne Steuerung 2 ausgleichen.

Die von der Steuereinheit 2 umfasste Kommunikationsschnittstelle 28 kann idealerweise in Echtzeit mit den externen Einrichtungen (z.B. Stellmotoren, Vorschubmotoren für Transportbänder, usw.) und Steuerungen, insbesondere der Hauptsteuerung, kommunizieren. Für die Kommunikation werden dabei vorzugsweise auch standardisierte Einheiten (bspw. m/s) verwendet, die mit der Hauptsteuerung abgeglichen werden.

Die bevorzugt in der Steuereinheit 2 enthaltene Sensoreinrichtung 22 dient zum Erfassen von zumindest einem Datensignal. Die Sensoren, die zum Einsatz kommen können, sind beispielsweise Schwingungsaufnehmer, Temperatursensoren, Drehzahlerfassungssensoren, Positionsüberwachungssensoren für die Position des Werkzeugspanners, Sensoren zur Erfassung einer möglichen Leckage und/oder Sensoren zur Erfassung des Motorstroms. Vorzugsweise umfasst die Steuereinheit 2, bspw. in der Sensoreinheit 22, eine Signalaufbereitung 23, in der die Daten der Sensoren bspw. digitalisiert und in eine passende Verarbeitungsform gebracht werden.

Über einen in der Spindeleinheit 1 vorzugsweise an der Spindel eingebauten Sensorschwingungsaufnehmer ist es bspw. möglich, einerseits die Unwucht der sich drehenden Spindel zu erfassen und andererseits den fortschreitenden Verschleiß der Bauteile zu ermitteln. Die Überwachung der Unwucht während des Beschleunigungsvorgangs lässt es zu, defekte Werkzeuge 7 zu erkennen und trägt somit zur Erhöhung der Sicherheit bei. Gleichzeitig können über direkte oder indirekte Messungen dieses Schwingungsaufnehmers kritische Zustände in der Maschinenstruktur und der Werkstückaufspannung detektiert werden. Temperatursensoren ermitteln die Betriebstemperatur an den relevanten Stellen und erlauben so den Betrieb der Spindeleinheit 1 und insbesondere der Spindel 6 im optimalen Bereich. Durch die Bewertung der erfassten Temperaturprofile kann der Bearbeitungsprozess vorteilhaft beeinflusst werden. Auch eine Drehzahlerfassung dient zur Überwachung bzw. Regelung der vorgegebenen Bearbeitungsdrehzahl. Weiterhin kann anhand des Verlaufs rechtzeitig eine Überlastung der Spindel 6 infolge eines Drehzahleinbruchs ermittelt werden. Zur Ermittlung der korrekten Funktion des Werkstücksspanners kann auch permanent die Position des Verriegelungsmechanismus durch einen Sensor erfasst werden. Mechanische Überlastungen durch die Bearbeitung oder eine Fehlfunktion im Verriegelungsmechanismus können somit unmittelbar erkannt werden. Ferner kann durch die bevorzugt andauernde Überwachung des Motorstroms ein Profil gewonnen werden, mit dem der Bearbeitungsprozess optimal eingestellt werden kann (sofern ein Motor in der Spindeleinheit 1 vorgesehen ist). Sensoren für eine Leckage sind insbesondere dann vorgesehen, wenn die Spindeleinheit 1 mehrere Fluidleitungen besitzt, bspw. bei einer elektro-pneumatisch/hdraulisch gesteuerten Spindeleinheit 1. Es können auch mehrere Sensoren derselben Art verbaut sein, sofern dies sinnvoll ist. Beispielsweise kann das Anordnen der Sensoren an verschiedenen Stellen der Spindeleinheit 1 vorteilhaft sein, bspw. die Erfassung der Temperatur an den Motorspulen und den Lagern oder der Schwingungen an den Lagern der Spindel 6, oder auch zur Erhöhung der Sicherheit eine Redundanz bestimmter Sensoren (Drehzahlerfassung, Motorstrom) erwünscht sein.

Dazu kann die Spindeleinheit 1 Aktoren umfassen, über die aktiv direkt Einfluss auf den Betrieb der Spindeleinheit 1 genommen werden kann. Die Aktoren werden nicht als Teil der Steuerung angesehen, die Steuereinheit 2 kann aber eine digitale Endstufe 25 enthalten, die die Steuerbefehle entsprechend zu den verwendeten Aktoren umwandelt (bspw. einen Strom für ein Piezoelement in Übereinstimmung mit dem Steuersignal erzeugt). Solche Aktoren können beispielsweise Reinigungsaktoren sein, Aktoren, die den Werkzeugspanner öffnen oder schließen, die die Stromzufuhr zum Motor steuern (bspw. zur Veränderung der Leistung des Motors), die einen Kraftfluss zur Spindel 6 unterbrechen können (bspw. Auskuppeln der Spindel), die das Werkzeug 7 vom Werkstück zurückziehen und/oder die bei einer bewegbaren Spindeleinheit 1 den Vorschub der Spindeleinheit 1 verändern können. Dadurch, dass diese Aktoren ebenfalls in der Spindeleinheit 1 sind, erhöht sich die Reaktionsgeschwindigkeit drastisch, da eine Notfallsteuerung nicht über eine externe Hauptsteuerung laufen muss, sondern innerhalb der Spindeleinheit 1 eingeleitet und auch ausgeführt werden kann.

Bevorzugt ist in der Steuereinheit 2 eine Speichereinrichtung 26 enthalten, die das Abrufen aller relevanten Daten über die gesamte Betriebszeit der Spindel 6 oder Spindeleinheit 1 ermöglicht. In dieser Speichereinrichtung 26 können alle relevanten Daten der Sensoreinrichtung 22 über die gesamte Lebenszeit der Spindel gespeichert werden. Sinnvoll ist dies insbesondere doch bei Motorstrom, Schwingungen und Temperatur, da durch diese Daten eine Verschleißkurve erstellt werden kann. Ferner können auch bestimmte Grenzwerte für das nachfolgend erläuterte Überwachungseinheit 21 oder Parameter für die Datenverarbeitungseinheit 27 festgelegt und gespeichert werden. So können Verläufe der ermittelten Betriebszustände während des Bearbeitungsprozesses aufgezeichnet und bewertet werden.

Die Steuereinheit weist bevorzugt auch ein Überwachungseinheit 21 auf, das kritische Prozessdaten/- parameter überwacht. Dieses Überwachungseinheit 21 erhält Daten aus der Sensoreinrichtung und/oder aus der Datenverarbeitungseinheit 27 und vergleicht sie mit Grenzwerten, die die Überwachungseinheit 21 aus der Speichereinrichtung 26 oder der Hauptsteuerung über die Kommunikationsschnittstelle 28 erhält. Wenn die Überwachungseinheit 21 feststellt, dass ein oder mehrere grenzwerte überschritten werden, wird eine Notfallsteuerung eingeleitet. D.h. es wird direkt auf den überschrittenen Grenzwert reagiert, indem ein Aktor, bevorzugt einer der in der Spindeleinheit 1 befindlichen Aktoren, betätigt wird und dabei die entsprechende Reaktion auslöst, die eine Beschädigung der Spindeleinheit 1 vermeidet. Z.B. kann bei einer Feststellung, dass die Schwingungen an den Lagern der Spindel 6 zu hoch sind und die Lager diesen Schwingungen nicht mehr stand halten können, sowohl das Werkzeug sofort aus einer Bearbeitungsposition gefahren werden und der Motorstrom abgeschaltet oder reduziert werden. Gleiches gilt auch für die Messung erhöhter Temperatur.

Die aus den Sensoren und Werkzeugdaten in der Datenverarbeitungseinheit gewonnen Zustände werden normalerweise zyklisch über die Kommunikationsschnittstelle 28 zur externen Maschinensteuerung übertragen und erlauben so einerseits die Einstellung der optimalen Betriebspunkte (z.B. Erhöhung oder Verringerung des Bearbeitungsvorschubs), andererseits die sofortige Reaktion der Maschinensteuerung auf kritische oder unerlaubte Betriebszustände (z.B. Überlast, Temperatur oder kritische Schwingungen). Wie oben erwähnt wird die jeweils notwendige Reaktion hierbei bevorzugt in der Datenverarbeitungseinheit 27 der Spindeleinheit generiert und als Vorgabewert oder Kommando über die Schnittstelle 28 an die Hauptsteuerung oder direkt an die Stellmotoren, usw. übergeben. Somit ist es möglich für unterschiedliche Spindeltypen die jeweils richtige Reaktion auszulösen, ohne dass hierzu die Hauptsteuerung angepasst werden muss. Die hohe Verarbeitungsgeschwindigkeit der Datenverarbeitungseinheit 27 erlaubt darüber hinaus kürzeste Reaktionszeiten bei kritischen Zuständen (bspw. einer Unwucht).

Die Reaktionszeit der Steuereinheit beträgt im Idealfall weniger als 15ms, bevorzugt weniger als 5ms und weiter bevorzugt weniger als lms. Innerhalb dieser Zeiten ist es möglich, die entsprechenden Steuersignale rechtzeitig auszusenden, so dass ein Ausfall oder eine Beschädigung durch kritische Zustände vermieden werden kann.
Die erfassten Parameter erlauben es weiterhin dem Maschinenbenutzer online über wichtige aktuelle Betriebsdaten der Spindel (Leistung, Temperatur, Schwingungen) in Form einer geeigneten Visualisierung (z.B. Balkenanzeige) zu informieren. In einem weiteren Schritt können die gewonnenen Betriebsdaten zur Langzeitdiagnose und somit zu einer Anzeige der prognostizierten Restlebensdauer herangezogen werden, womit die optimale Ausnutzung der Lebensdauer möglich wird ohne dass die Gefahr eines ungeplanten Maschinenstillstands durch einen Defekt der Spindel 6 besteht.

Die Steuereinheit 2, die mittels der Datenverarbeitungseinheit 27 die Prozessdaten erfasst und bearbeitet, kann über einen eingebauten Kompatibilitätsmodus verfügen, mittels dem die Signale von älteren Spindeleinheitsmodellen emuliert werden können. Somit ist es möglich im Servicefall ältere Spindeleinheiten zu ersetzen, ohne Änderungen an der Maschinensteuerung durchführen zu müssen.

Somit können in einer erfindungsgemäßen Spindeleinheit 1 sämtliche Betriebsparameter und insbesondere die einer Spindel 6 zentral erfasst und aufbereitet werden. Die notwendigen Reaktionen werden direkt in der Spindel eingebauten Steuerung 2 generiert und danach der Hauptsteuerung zur Verfügung gestellt. Somit ergibt sich zwischen Spindel und Hauptsteuerung eine einheitliche Schnittstelle 28, unabhängig der verwendeten Arten der Spindeleinheiten. Damit ist eine sehr gute Analyse der Bearbeitungsspindel ermöglicht.

## Patentansprüche

1. Werkzeugmaschine (1) mit einem Werkzeug (7) für die Bearbeitung von Werkstücken bevorzugt aus Holz, Holzwerkstoffen und/oder Kunststoffen, und mit einem Gehäuse (11), ferner umfassend:
eine Steuereinheit (2), umfassend
- eine Sensoreinrichtung (22) mit zumindest einem Sensor zum Erfassen von zumindest einem Datensignal;
- eine Datenverarbeitungseinrichtung (27), die dazu eingerichtet ist, die von den Sensoren erfassten Daten und Daten aus einer externen Hauptsteuerung zu verarbeiten;
die Steuereinheit (2) dazu eingerichtet ist, auf Grundlage der verarbeiteten Daten Steuerbefehle zu generieren und auszugeben, die direkt auf Prozessparameter Einfluss nehmen,
wobei
die Steuereinheit (2) eingerichtet ist, Signale von verschiedenen Spindeltypen zu emulieren, wobei die von der zumindest einen Sensoreinrichtung erfassten Datensignale eine Position des Werkzeugspanners ist.

2. Werkzeugmaschine (1) nach Anspruch 1, bei der die Steuereinheit (2) ferner eine Speichereinrichtung (26) enthält, die eingerichtet ist, die Daten des Maschinentyps und/oder die Datensignale der Sensoreinrichtung und/oder die von der Datenverarbeitungseinrichtung (23) verarbeiteten Daten und/oder die von der Hauptsteuerung an die Steuereinheit (2) ausgegebenen Daten und/oder die von einer Überwachungseinheit (21) festgelegten Zustände zu speichern.

3. Werkzeugmaschine (1) nach Anspruch 1 oder 2, die ferner zumindest eine Aktoreinrichtung (24) mit zumindest einem Aktor aufweist, der durch die aus der Steuereinheit (2) als Reaktion auf die Festlegung einer Überwachungseinheit (21) der Steuereinheit ausgegebenen Signale betätigt wird.

4. Werkzeugmaschine (1) nach einem der vorhergehenden Ansprüche, ferner umfassend eine Spindel (6) und einen Motor oder eine Antriebsschnittstelle zum Antreiben der Spindel (6).

5. Werkzeugmaschine (1) nach einem der vorhergehenden Ansprüche, bei der die Steuereinheit (2) eine Kommunikationsschnittstelle (28) umfasst und eingerichtet ist, die verarbeiteten und/oder gespeicherten Prozessdaten an eine externe Maschinensteuerung auszugeben.

6. Werkzeugmaschine (1) nach einem der vorhergehenden Ansprüche, bei der die Steuereinheit (2) eine Überwachungseinheit (21) für zeitkritische Prozessparameter umfasst, die eingerichtet ist festzulegen, ob von der Sensoreinrichtung (22) erfasste Daten und/oder von der Datenverarbeitungseinrichtung (27) verarbeitete Daten einen kritischen Wert erreicht haben, und
die Steuereinheit (2) dazu eingerichtet ist, als Reaktion auf die Festlegung der Überwachungseinheit (21), dass ein kritischer Wert erreicht wurde, Steuersignale für eine Notfallsteuerung auszugeben.

7. Werkzeugmaschine (1) nach einem der vorhergehenden Ansprüche, bei der die Werkzeugmaschine (1) eine Spindeleinheit (1), die bevorzugt einwechselbar ausgestaltet ist.

8. Verfahren zum Steuern einer Werkzeugmaschine, die eine Steuereinheit (2) umfasst, welche eine Sensoreinrichtung (22) zum Erfassen von Daten mit zumindest einem Sensor und eine Datenverarbeitungseinrichtung (27) aufweist und eingerichtet ist, Signale von verschiedenen Spindeltypen zu emulieren, wobei die von der zumindest einen Sensoreinrichtung erfassten Datensignale eine Position des Werkzeugspanners ist, wobei das Verfahren die Schritte umfasst:
Übermitteln von Daten aus einer externen Hauptsteuerung und aus der Sensoreinrichtung an die Datenverarbeitungseinrichtung (27);
Verarbeiten der erfassten Daten in der Datenverarbeitungseinrichtung (27);
Erzeugen von Steuerbefehlen auf Grundlage der verarbeiteten Daten in der Datenverarbeitungseinheit (27), die direkt auf Prozessparameter Einfluss nehmen; und
Ausgeben der Steuerbefehle.

9. Verfahren nach Anspruch 8, bei dem die Steuereinheit (2) eine Überwachungseinheit (21) für zeitkritische Prozessparameter umfasst, wobei das Verfahren ferner die Schritte umfasst:
Festlegen durch die Überwachungseinheit (21), ob die von der Sensoreinrichtung (22) erfassten Daten und/oder von der Datenverarbeitungseinrichtung (27) verarbeitete Daten einen kritischen Wert erreicht haben; und
Ausgeben von Steuersignalen für eine Notfallsteuerung, als Reaktion auf die Festlegung der Überwachungseinheit (21), dass ein kritischer Wert erreicht wurde.

10. Verfahren nach Anspruch 8 oder 9, bei dem die Steuereinheit (2) eine Speichereinrichtung (26) aufweist, in der die Daten des Maschinentyps, die Datensignale der Sensoreinrichtung, die von der Datenverarbeitungseinrichtung (23) verarbeiteten Daten, die von der Hauptsteuerung an die Steuereinheit (2) ausgegebenen Daten und/oder die von der Überwachungseinheit (21) festgelegten Zustände gespeichert werden können, wobei das Verfahren ferner die Schritte umfasst:
Auslesen der in der Speichereinrichtung (26) gespeicherten Daten des Maschinentyps;
Erzeugen von Steuersignalen in der Steuereinheit (2) für die Einstellung von Prozessparameter, die dem Maschinentyp entsprechen und Ausgeben dieser Steuersignale.

11. Verfahren nach einem der Ansprüche 8 bis 10, unter Verwendung einer Werkzeugmaschine nach einem der Ansprüche 1 bis 7.

## Claims

1. Machine tool (1) having a tool (7) for the processing of workpieces preferably made of wood, derived timber products and/or plastics, and having a housing (11), further comprising:
a control unit (2), comprising
- a sensor device (22) having at least one sensor for detecting at least one data signal;
- a data processing device (27) which is designed to process the data detected by the sensors and data from an external main control system;
the control unit (2) is designed on the basis of the processed data to generate and output control commands which directly influence process parameters,
wherein
the control unit (2) is designed to emulate signals of different spindle types, wherein the data signal detected by the at least one sensor device is a position of the tool clamp.

2. Machine tool (1) according to claim 1, in which the control unit (2) further includes a memory device (26) which is designed to store the data of the machine type and/or the data signals of the sensor device and/or the data processed by the data processing device (23) and/or the data outputted by the main control system to the control unit (2) and/or the status data stipulated by the monitoring unit (21).

3. Machine tool (1) according to claim 1 or 2, which further has at least one actuator device (24) having at least one actuator which is actuated by the signals outputted from the control unit (2) as a response to the stipulation of a monitoring unit (21) of the control unit.

4. Machine tool (1) according to any of the preceding claims, further comprising a spindle (6) and a motor or a drive interface for driving the spindle (6).

5. Machine tool (1) according to any of the preceding claims, in which the control unit (2) comprises a communications interface (28) and is designed to output the processed and/or stored process data to an external machine control system.

6. Machine tool (1) according to any of the preceding claims, in which the control unit (2) comprises a monitoring unit (21) for time-critical process parameters, which is designed to stipulate whether data detected by the sensor device (22) and/or data processed by the data processing device (27) have reached a critical value, and
the control unit (2) is designed to output control signals for emergency control as a response to the stipulation of the monitoring unit (21) that a critical value has been reached.

7. Machine tool (1) according to any of the preceding claims, in which the machine tool (1) is a spindle unit (1) which is preferably of replaceable design.

8. Method for the control of a machine tool comprising a control unit (2), which has a sensor device (22) for detecting data having at least one sensor and a data processing device (27), and is designed to emulate signals of different spindle types, wherein the data signal detected by the at least one sensor device is a position of the tool clamp, wherein the method comprises the steps of:
transmission of data from an external main control system and from the sensor device to the data processing device (27);
processing of the detected data in the data processing device (27);
generation of control commands on the basis of the processed data in the data processing unit (27), which directly influence process parameters; and
output of the control commands.

9. Method according to claim 8, in which the control unit (2) comprises a monitoring unit (21) for time-critical process parameters, wherein the method further comprises the steps of:
stipulation by the monitoring unit (21) whether the data detected by the sensor device (22) and/or data processed by the data processing device (27) have reached a critical value; and
output of control signals for emergency control as a response to the stipulation of the monitoring unit (21) that a critical value has been reached.

10. Method according to claim 8 or 9, in which the control unit (2) has a memory device (26) in which can be stored the data of the machine type, the data signals of the sensor device, the data processed by the data processing device (23), the data outputted by the main control system to the control unit (2) and/or the status data stipulated by the monitoring unit (21), wherein the method further comprises the steps of:
reading out the data of machine type stored in the memory device (26);
generation of control signals in the control unit (2) for the adjustment of process parameters which correspond to the machine type, and output of these control signals.

11. Method according to any of claims 8 to 10, using a machine tool according to any of claims 1 to 7.

## Revendications

1. Machine-outil (1) pourvue d'un outil (7) pour le façonnage de pièces, de préférence en bois, en matériaux dérivés du bois et/ou en matières plastiques, et pourvue d'un boîtier (11), comprenant en outre :
une unité de commande (2), comprenant :
- un dispositif de détection (22) pourvu au moins d'un capteur servant à saisir au moins un signal de données,
- un dispositif de traitement de données (27), qui est conçu pour traiter les données saisies par les capteurs et des données issues d'une commande principale externe,
l'unité de commande (2) étant conçue pour générer et délivrer des instructions de commande sur la base des données traitées, lesquelles influent directement sur des paramètres de processus,
dans laquelle :
l'unité de commande (2) est conçue pour émuler des signaux de différents types de broche, les signaux de données saisis par le au moins un dispositif de détection étant une position du système de serrage d'outil.

2. Machine-outil (1) selon la revendication 1, dans laquelle l'unité de commande (2) contient en outre un dispositif de mémorisation (26) qui est conçu pour mémoriser les données du type de machine et/ou les signaux de données du dispositif de détection et/ou les données traitées par le dispositif de traitement de données (23) et/ou les données délivrées par la commande principale à l'unité de commande (2) et/ou les états déterminés par une unité de surveillance (21).

3. Machine-outil (1) selon la revendication 1 ou 2, qui présente en outre au moins un dispositif d'actionnement (24) pourvu d'au moins un actionneur, qui est commandé par les signaux délivrés par l'unité de commande (2) en réponse à la détermination d'une unité de surveillance (21) de l'unité de commande.

4. Machine-outil (1) selon l'une quelconque des revendications précédentes, comprenant en outre une broche (6) et un moteur ou une interface d'entraînement servant à entraîner la broche (6).

5. Machine-outil (1) selon l'une quelconque des revendications précédentes, dans laquelle l'unité de commande (2) comprend une interface de communication (28) et est conçue pour délivrer les données de processus traitées et/ou mémorisées à une commande de machine externe.

6. Machine-outil (1) selon l'une quelconque des revendications précédentes, dans laquelle l'unité de commande (2) comprend une unité de surveillance (21) pour des paramètres de processus critiques en termes de délais, laquelle unité de surveillance est conçue pour déterminer si des données saisies par le dispositif de capteur (22) et/ou des données traitées par le dispositif de traitement de données (27) ont atteint une valeur critique, et
dans laquelle l'unité de commande (2) est conçue pour délivrer des signaux de commande pour une commande d'urgence en réponse à la détermination de l'unité de surveillance (21) établissant qu'une valeur critique a été atteinte.

7. Machine-outil (1) selon l'une quelconque des revendications précédentes, dans laquelle la machine-outil (1) est une unité à broche (1) configurée de préférence en mode interchangeable.

8. Procédé servant à commander une machine-outil, qui comprend une unité de commande (2), qui présente un dispositif de détection (22) servant à saisir des données avec au moins un capteur ainsi qu'un dispositif de traitement de données (27) et qui est conçue pour émuler des signaux de différents types de broche, les signaux de données détectés par le au moins un dispositif de détection étant une position du système de serrage d'outil, le procédé comprenant les étapes suivantes consistant à :
transférer des données d'une commande principale externe et du dispositif de détection au dispositif de traitement de données (27) ;
traiter les données saisies dans le dispositif de traitement de données (27) ;
générer des instructions de commande sur la base des données traitées dans l'unité de traitement de données (27), qui influent directement sur des paramètres de processus ; et
délivrer des instructions de commande.

9. Procédé selon la revendication 8, dans lequel l'unité de commande (2) comprend une unité de surveillance (21) pour des paramètres de processus critiques en termes de délais, le procédé comprenant en outre les étapes consistant à :
déterminer par l'unité de surveillance (21) si les données détectées par le dispositif de détection (22) et/ou les données traitées par le dispositif de traitement de données (27) ont atteint une valeur critique ; et
délivrer des signaux de commande pour une commande d'urgence en réponse à la détermination de l'unité de surveillance (21) établissant qu'une valeur critique a été atteinte.

10. Procédé selon la revendication 8 ou 9, dans lequel l'unité de commande (2) présente un dispositif de mémorisation (26), dans lequel les données du type de machine, les signaux de données du dispositif de détection , les données traitées par le dispositif de traitement de données (23), les données délivrées par la commande principale à l'unité de commande (2) et/ou les états déterminés par l'unité de surveillance (21) peuvent être mémorisés, le procédé comprenant en outre les étapes consistant à :
lire les données du type de machine mémorisées dans le dispositif de mémorisation (26) ;
générer des signaux de commande dans l'unité de commande (2) pour la configuration de paramètres de processus, qui correspondent au type de machine, et délivrer lesdits signaux de commande.

11. Procédé selon l'une quelconque des revendications 8 à 10 utilisant une machine-outil selon l'une quelconque des revendications 1 à 7.
